# EUROPÄISCHE PATENTSCHRIFT

(11) **EP 3 011 204 B1**
(45) Veröffentlichungstag und Bekanntmachung des Hinweises auf die Patenterteilung: **15.11.2017**
(21) Anmeldenummer: 14725964.2
(22) Anmeldetag: 21.05.2014
(51) Int. Cl.: F16H 55/17

(54) **VERZAHNUNGSTEIL UND GETRIEBE MIT VERZAHNUNGSTEIL**
TOOTHED PART AND GEAR WITH TOOTHED PART
PARTIE DE DENTURE ET TRANSMISSION PRÉSENTANT UNE PARTIE DE DENTURE

(30) Priorität: 17.06.2013 DE 102013010028
(43) Veröffentlichungstag der Anmeldung: 27.04.2016
(73) Patentinhaber: Sew-Eurodrive GmbH & Co. KG, 76646 Bruchsal (DE)
(72) Erfinder: WÖPPERMANN, Markus, 76307 Karlsbad (DE)
(86) Internationale Anmeldenummer: PCT/EP2014/001353
(87) Internationale Veröffentlichungsnummer: WO 2014/202170

(56) Entgegenhaltungen:
- EP-A2- 2 208 915
- WO-A1-2010/132914
- DE-A1- 2 848 206
- JP-A- S58 178 050
- US-A- 5 967 672

## Beschreibung

Die Erfindung betrifft ein Verzahnungsteil und ein Getriebe mit Verzahnungsteil.
Es ist allgemein bekannt, dass Verzahnungsteile Evolventenverzahnungen aufweisen, die bei miteinander kämmenden Verzahnungsteilen miteinander im Eingriff stehen. Zur Verringerung der Reibung wird in Getrieben, welche miteinander kämmende Verzahnungsteile aufweisen, Schmieröl vorgesehen.

Aus der gatungsgemäßen DE 28 48 206 A1 sind im Eingriff stehende Zahnräder bekannt, welche an ihrer Zahnflanke Vertiefungen aufweisen.
Aus der WO 2010/132914 A1 ist ein Zahnrad bekannt.

Aus der US 5 967 672 A sind Maschinenteile bekannt, deren Oberfläche mit diskontinuierlichen Vertiefungen versehen sind.
Aus der JP S58 178050 A ist ein Verzahnungsteil mit geschlitzten Zähnen bekannt.
Aus der EP 2 208 915 A2 ist ein Verzahnungsteil bekannt, dessen Zahn ein aus Vertiefungen gebildetes Schmiermitteldepot aufweist.
Der Erfindung liegt daher die Aufgabe zugrunde, die Verluste bei Getrieben zu verringern und die Tragfähigkeit der Zahnflanken zu erhöhen.
Erfindungsgemäß wird die Aufgabe bei dem Verzahnungsteil nach den in Anspruch 1 und bei dem Getriebe mit Verzahnungsteil nach den in Anspruch 12 angegebenen Merkmalen gelöst.

Von Vorteil ist dabei, dass der Verschleiß und die Reibung verringert wird, indem die Vertiefungen den Schmierfilmaufbau entlang der Zahnflanke während der Drehbewegung des Verzahnungsteils beschleunigen und einen Druckaufbau, insbesondere also "AquaPlaning Effekt" bewirken. Insbesondere in Bereichen mit großem oder steigendem Gleitanteil der Wälzbewegung der miteinander kämmenden Verzahnungsteile ist die Wirkung der Vertiefungen besonders effektiv.
Bei einer vorteilhaften Ausgestaltung ist die Anordnung und/oder Mikrotexturierung bei den Zahnflanken der verschiedenen Zähne, insbesondere aller Zähne, gleich. Von Vorteil ist dabei, dass dasselbe Werkzeug für alle zahnflanken verwendbar ist zur Herstellung der Vertiefungen, wobei das Zahnrad nur in entsprechende Drehstellungen gebracht werden muss.
Bei einer vorteilhaften Ausgestaltung sind die Vertiefungen jeweils beabstandet vom Wälzkreis. Insbesondere beträgt der Abstand mindestens das Dreifache des kleinsten Durchmessers einer jeweiligen Vertiefung. Von Vorteil ist dabei, dass ein genügend hoher Gleitanteil vorhanden ist.
Bei einer vorteilhaften Ausgestaltung bilden die Vertiefungen ein regelmäßiges Gitter, insbesondere ein regelmäßiges endliches Gitter. Von Vorteil ist dabei, dass ein deterministisches Herstellen einfache ausführbar ist.
Bei einer vorteilhaften Ausgestaltung sind die Vertiefungen in einem Bereich der jeweiligen Zahnflanke angeordnet, welcher einen höheren Gleitanteil und/oder eine höhere Gleitgeschwindigkeit aufweist als im Bereich des Berührpunktes und/oder im Bereich des Teilkreises und/oder im Bereich des Betriebswälzkreises. Von Vorteil ist dabei, dass in dem Bereich mit hohem oder steigendem Gleitanteil die Reibungsverminderung groß ist Erfindungsgemäß weist die Vertiefung in Gleitrichtung eine kleinere Ausdehnung auf als senkrecht zur Gleitrichtung. Von Vorteil ist dabei, dass der "Aquaplaning"-Effekt besonders effektiv ist und somit die Reibung stark reduziert ist. Erfindungsgemäß weist die Richtung der größten Ausdehnung der Vertiefung einen Winkel zur Gleitrichtung auf, der mehr als 45° beträgt. Von Vorteil ist dabei, dass ein besonders schneller schmierfilmaufbau bewirkbar ist.
Bei einer vorteilhaften Ausgestaltung weist die Richtung der größeren Ausdehnung der Vertiefung einen größeren Winkel zur Gleitrichtung auf als die Richtung der kleineren Ausdehnung der Vertiefung. Von Vorteil ist dabei, dass der Schmierfilmaufbau bei geeigneter Anordnung der Vertiefungen besonders schnell bewirkbar ist.
Bei einer vorteilhaften Ausgestaltung weist die ohne Vertiefungen vorgesehene Zahnflanke im Stirnschnitt einen Evolventenabschnitt auf und/oder eine positive oder eine negative Krümmung, wobei also das Vorzeichen der Krümmung entlang der ohne Vertiefungen vorgesehenen Zahnflanke unveränderlich ist. Von Vorteil ist dabei, dass die Grundfläche, in welche die Vertiefungen eingebracht sind, ein konvexe Fläche ist, also die ohne Vertiefungen vorgesehene Zahnflanke ohne lokale Extrema ausgeführt ist.

Bei einer vorteilhaften Ausgestaltung sind eine oder mehrere Vertiefungen punktsymmetrisch und/oder haben eine kreisförmige Kontur und/oder weisen in Gleitrichtung und anderen Tangentialrichtungen der Zahnflanke die gleiche Ausdehnung auf. Von Vorteil ist dabei, dass eine Herstellung einfach ausführbar ist.

Bei einer vorteilhaften Ausgestaltung weisen eine oder mehrere Vertiefungen in einer ersten Tangentialrichtung zur Zahnflanke eine größere Ausdehnung auf als in einer anderen Tangentialrichtung der Zahnflanke,
insbesondere wobei die eine oder mehreren Vertiefungen in einer ersten, zur Position der jeweiligen Vertiefung gehörenden Tangentialrichtung zur Zahnflanke eine größere Ausdehnung aufweisen als in einer anderen, zur Position der jeweiligen Vertiefung gehörenden Tangentialrichtung der Zahnflanke. Von Vorteil ist dabei, dass ein effektiverer "Aquaplaning"-Effekt erreichbar ist und somit die Reibung stark verminderbar ist. Erfindungsgemäß sind eine oder mehrere S-förmig und/oder mäanderförmig ausgeformt. Von Vorteil ist dabei, dass einerseits bei I-förmigen oder strichförmigen Vertiefungen die Herstellung wenig aufwendig ist und andererseits der Schmierfilmaufbau schnell bewirkbar ist.
Bei einer vorteilhaften Ausgestaltung sind die Vertiefungen voneinander beabstandet, insbesondere regelmäßig. Von Vorteil ist dabei, dass der Schmierfilmaufbau großflächig schnell aufbaubar ist.

Bei einer vorteilhaften Ausgestaltung sind die Vertiefungen in Reihen angeordnet, insbesondere in zueinander parallel angeordneten Reihen angeordnet sind, insbesondere wobei die Reihen sich parallel zur Flankenrichtung eines Zahns erstrecken,

insbesondere wobei innerhalb jeder Reihe die Vertiefungen jeweils gleichmäßig voneinander beabstandet sind, wobei der jeweils kleinste Abstand der Vertiefungen der Reihen denselben Wert bei allen Reihen aufweist,
insbesondere wobei eine zweite Reihe zwischen einer ersten und einer dritten Reihe angeordnet ist, insbesondere in Richtung des Stirnschnitts von Kopf zum Fuß,
insbesondere wobei die zweite Reihe einen Versatz in Flankenrichtung aufweist zu den beiden anderen Reihen, insbesondere wobei der Versatz der Hälfte des kleinsten Abstandes der Vertiefungen einer Reihe entspricht. Von Vorteil ist dabei, dass die Reibung besonders gut vermindert und der Schmierfilmaufbau mit wenigen kleinen Vertiefungen schnell bewirkbar ist.
Bei einer vorteilhaften Ausgestaltung beträgt der Flächenanteil der Vertiefungen an der jeweiligen gesamten Zahnflankenfläche jeweils zwischen 5% und 50%. Von Vorteil ist dabei, dass die Reibung in Abhängigkeit von der Gleitgeschwindigkeit stark verringerbar ist bei relativ geringem Flächenanteil der Vertiefungen.

Bei einer vorteilhaften Ausgestaltung weist eine jeweilige Vertiefungen eine Tiefe zwischen 5 µm und 200 µm und/oder eine Breite zwischen 5 µm und 300µm auf
und/oder die Länge beträgt zwischen 5µm und 1000 µm, wenn die Vertiefung mit einer größeren Länge als ihre Breite beträgt ausgeführt werden soll. Von Vorteil ist dabei, dass bei dieser Dimensionierung bei Verzahnungsteilen mit einem Teilkreisdurchmesser von mehr als 5 cm besonders gute Wirkungen erzielbar sind.
Wichtige Merkmale bei dem Getriebe mit Verzahnungsteil sind, dass das Verzahnungsteil mit einem weiteren Verzahnungsteil im Eingriff steht,
insbesondere wobei der Berührpunkt oder die Berührlinie der beiden im Eingriff stehenden Verzahnungsteile während der Drehbewegung der Verzahnungsteile sich zum Kopf des jeweiligen Zahns hin bewegt oder von diesem weg.

Von Vorteil ist dabei, dass der Schmierfilm zwischen den im Eingriff stehenden Verzahnungen besonders schnell bewirkbar ist und die Reibung verringerbar ist.

Weitere Vorteile ergeben sich aus den Unteransprüchen.

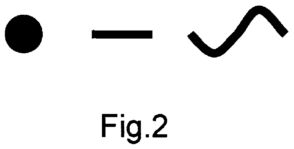

Die Erfindung wird nun anhand von Abbildungen näher erläutert:

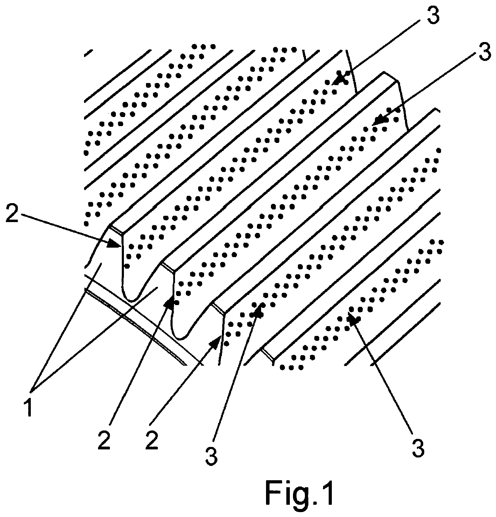

In der Figur 1 ist ein Ausschnitt einer Verzahnung schematisch und in Schrägansicht gezeigt, wobei eine jeweilige Zahnflanke der Verzahnung Vertiefungen 3, insbesondere Mikrotexturierung, aufweist.
In der Figur 2 sind drei verschiedene Formen oder Konturen für eine jeweilige der Vertiefungen 3 gezeigt.
Wie in Figur 1 gezeigt weist ein Verzahnungsteil Zähne auf, deren Zahnflanken 2 sich von einer ersten Stirnseite bis zu einer zweiten Stirnseite erstrecken.
Vorzugsweise verlaufen die Zähne evolventenartig, insbesondere weist also die Zahnflanke 2 im Stirnschnitt den Verlauf beispielsweise eines Evolventenabschnitts auf. Dabei muss sich der Abschnitt nicht vom Fuß bis zum Kopf des jeweiligen Zahns 2 erstrecken sondern vom Abschnitt aus zum Kopf und/oder zum Fuß hin können korrigierte Verläufe vorgesehen werden. In Flankenrichtung ist die Verzahnung gerade oder mit nicht verschwindendem Schrägungswinkel ausführbar.
Die Zahnflanken 2 weisen jeweils vorzugsweise voneinander beabstandete Vertiefungen 3 auf.
Das in Figur 2 ausschnittsweise gezeigte Verzahnungsteil steht mit einem weiteren Verzahnungsteil im Eingriff, wobei Schmieröl, wie beispielsweise Getriebeöl vorsehbar ist. Im Stirnschnitt weist ein jeweiliger Zahn 2 entlang des Evolventenabschnitts oder der sich daran anschließenden Korrekturbereiche eine Eingriffslinie auf, entlang derer der Berührbereich mit dem anderen Verzahnungsteil durchwandert während des Kämmens. Die Gleitanteile nehmen mit zunehmender Entfernung vom Teilkreis der Verzahnung zu und verursachen Gleitreibung und daher auch Verschleiß. Mittels der Erfindung, also der auf der Zahnflanke angebrachten Mikrotexturierung, wird der Schmierfilmaufbau in diesen Gleitreibungsbereichen der Zahnflanke schneller realisiert und somit Reibung reduziert und Verschleiß vermindert und/oder die Standzeit des Verzahnungsteils erhöht.

Der Bereich der Vertiefungen 3, also der Mikrotexturierung, ist vorzugsweise im Bereich eines nicht verschwindenden Gleitens der miteinander im Eingriff stehenden Verzahnungen angeordnet. In demjenigen Bereich der Zahnflanke, in welchem also der Gleitanteil über einem kritischen Mindestwert liegt, wirken die Vertiefungen 3 effektiv. Denn diese Bereiche sind tribologisch entsprechend hoch beansprucht.

Denn im Betrieb befüllen sich die Vertiefungen 3 mit Schmieröl, so dass sozusagen eine "Aqua-Planing"-Wirkung zum kämmenden Verzahnungsteil hin auftritt. Der Schmierfilmaufbau entlang der Zahnflanke wird durch die Vertiefungen 3 und das darin gesammelte Schmieröl besonders schnell bewirkt - auch bei kleinen Relativgeschwindigkeiten. Die Wirkbereiche der beiden miteinander kämmenden Verzahnungsteile werden frühzeitig vollständig getrennt. Insgesamt ist also Verschleiß und Reibung reduziert.

Wie in Figur 2 gezeigt, ist für eine Vertiefung 3 eine der in Figur 2 gezeigten verschiedenen Formen wählbar und anwendbar.

Vorzugsweise sind alle Vertiefungen 3 gleichartig, so dass eine einfache Herstellung ausführbar ist.

Die Vertiefungen 3 sind voneinander beabstandet, vorzugsweise regelmäßig. Hierbei hat sich eine Anordnung der Vertiefungen als besonders vorteilhaft erwiesen, bei der in Flankenrichtung drei Reihen regelmäßig beabstandeter Vertiefungen 3 gebildet sind, wobei die Reihen in Richtung der Eingriffslinie, also in Richtung von Fuß des Zahns zum Kopf des Zahns voneinander regelmäßig beabstandet sind. Die Vertiefungen 3 sind innerhalb der Reihe gleichmäßig beabstandet, wobei die Reihen zueinander gleichartig, also mit der jeweils gleichartigen Beabstandung, ausgeführt sind. Die mittlere Reihe weist jedoch einen Versatz in Flankenrichtung auf. Somit ergibt sich die Texturierungsgitter durch Translationen, insbesondere durch regelmäßige Translationen, einer der Gitterzelle in Flankenrichtung. Die Gitterzelle entspricht dabei der Anordnung der Punkte Einer Fünf eines Spielwürfels. Also sind die Vertiefungen 3, insbesondere punktförmigen Vertiefungen 3, der Gitterzelle als rechteckige, insbesondere quadratische, Anordnung mit Mittelpunkt darstellbar. Die gesamte Texturierung entsteht aus den translatorischen Verschiebungen der Gitterzelle in Flankenrichtung um ein ganzzahliges Vielfaches einer Kantenlänge der rechteckige, insbesondere quadratische, Anordnung.

Die Vertiefungen sind jeweils geschlossen ausgeführt, also nicht zusammenhängend.

Die Vertiefungen 3 weisen eine Tiefe zwischen 5 µm und 200 µm und einen Breite zwischen 5 µm und 300µm auf. Wenn die Vertiefung mit einer größeren Länge als ihre Breite beträgt ausgeführt werden soll, beträgt die Länge zwischen 5µm und 1000 µm. Außerdem sind solche Vertiefungen 3, also beispielsweise die linienförmige oder S-förmige Vertiefung 3 nach Figur 2, senkrecht zur Gleitrichtung angeordnet. In Gleitrichtung sind sie also weniger ausgedehnt als senkrecht zur Gleitrichtung der miteinander kämmenden Verzahnungsteile. Die längste Ausdehnung weist die Vertiefung also jeweils senkrecht zur Gleitrichtung auf oder zumindest in einer Richtung, welche einen Winkel von mehr als 45° zur Gleitrichtung aufweist. Die Richtung ist hierbei Tangentialrichtung der Zahnflanke, insbesondere im Bereich der Vertiefung 3. Anders ausgedrückt, hat also die Richtung der längeren Ausdehnung der Vertiefung 3 einen kleineren Winkel zur Gleitrichtung als die Richtung der kürzeren Ausdehnung der Vertiefung 3.

Der Flächenanteil der Vertiefungen an der gesamten Zahnflankenfläche beträgt jeweils zwischen 5% und 50%.

Die Vertiefungen werden mittels Laserablation gefertigt. Alternativ ist auch eine elektrochemische Fertigung, eine chemische Fertigung, eine Strahlbehandlung mit Strahlgut und Masken ausführbar oder eine mechanische Fertigung.

Die Flankenrichtung ist die Richtung, in welcher auch Balligkeiten vorsehbar sind. Die Flankenrichtung verläuft längs des Zahnes, also insbesondere entlang des Schnitts des Teilkreises der Verzahnung mit dem Zahn.

Bei der mechanischen Fertigung ist entweder eine Strahlbearbeitung ausführbar oder eine Fertigung, bei der ein Werkzeug, das eine jeweilige Vertiefung 3 einbringt, von einem Piezoelement in Normalenrichtung zur Flankenfläche gehoben und abgesenkt wird.

Bei einem weiteren erfindungsgemäßen Ausführungsbeispiel sind an einem Verzahnungsteil die Vertiefungen 3 jeweils verschieden ausgeführt. Es sind also mindestens zwei der in Figur 2 gezeigten Sorten an einer Zahnflanke vorgesehen. Besonders bevorzugt sind dabei kleinere Vertiefungen näher am Betriebswälzkreis der kämmenden Verzahnungen angeordnet und größere weitere davon entfernt, also im Bereich der größeren Gleitanteile. Somit nimmt die Ausdehnung der Vertiefungen 3 mit dem Gleitanteil des jeweiligen Zahnflankenabschnitts zu.

Bei einem weiteren erfindungsgemäßen Ausführungsbeispiel sind statt der S-förmigen Vertiefung 3 nach Figur 2 andere gekrümmte, wellenartige oder bogenartige Formen verwendbar.

### Bezugszeichenliste

1 Stirnseite eines Zahnes der Verzahnung
2 Zahnflanke
3 Vertiefungen, insbesondere Mikrotexturierung

## Patentansprüche

1. Verzahnungsteil, aufweisend Zähne,
**wobei** in einer jeweiligen Zahnflanke eines oder mehrerer oder aller der Zähne
- eine Anordnung, insbesondere eine deterministische Anordnung, von Vertiefungen und/oder
- eine Mikro-Texturierung
vorgesehen ist, insbesondere eingebracht ist,
**dadurch gekennzeichnet, dass**
die Vertiefung in Gleitrichtung eine kleinere Ausdehnung aufweist als senkrecht zur Gleitrichtung,
wobei die Richtung der größten Ausdehnung der Vertiefung einen Winkel zur Gleitrichtung aufweist, der mehr als 45° beträgt,
wobei die Vertiefungen S-förmig oder mäanderförmig ausgeformt sind.

2. Verzahnungsteil nach Anspruch 1,
**dadurch gekennzeichnet, dass**
die Anordnung oder Mikrotexturierung bei den Zahnflanken der verschiedenen Zähne, gleich ist.

3. Verzahnungsteil nach mindestens einem der vorangegangenen Ansprüche,
**dadurch gekennzeichnet, dass**
die Vertiefungen jeweils beabstandet sind vom Wälzkreis.

4. Verzahnungsteil nach mindestens einem der vorangegangenen Ansprüche,
**dadurch gekennzeichnet, dass**
die Vertiefungen ein regelmäßiges Gitter bilden.

5. Verzahnungsteil nach mindestens einem der vorangegangenen Ansprüche,
**dadurch gekennzeichnet, dass**
die Vertiefungen in einem Bereich der jeweiligen Zahnflanke angeordnet sind, welcher einen höheren Gleitanteil aufweist als im Bereich des Betriebswälzkreises.

6. Verzahnungsteil nach mindestens einem der vorangegangenen Ansprüche,
**dadurch gekennzeichnet, dass**
die ohne Vertiefungen vorgesehene Zahnflanke im Stirnschnitt einen Evolventenabschnitt aufweist wobei also das Vorzeichen der Krümmung entlang der ohne Vertiefungen vorgesehenen Zahnflanke unveränderlich ist.

7. Verzahnungsteil nach mindestens einem der vorangegangenen Ansprüche,
**dadurch gekennzeichnet, dass**
die Vertiefungen in einer ersten Tangentialrichtung zur Zahnflanke eine größere Ausdehnung aufweisen als in einer anderen Tangentialrichtung der Zahnflanke.

8. Verzahnungsteil nach mindestens einem der vorangegangenen Ansprüche,
**dadurch gekennzeichnet, dass**
die Vertiefungen voneinander regelmäßig beabstandet sind.

9. Verzahnungsteil nach mindestens einem der vorangegangenen Ansprüche,
**dadurch gekennzeichnet, dass**
die Vertiefungen in zueinander parallel angeordneten Reihen angeordnet sind,

10. Verzahnungsteil nach mindestens einem der vorangegangenen Ansprüche,
**dadurch gekennzeichnet, dass**
der Flächenanteil der Vertiefungen an der jeweiligen gesamten Zahnflankenfläche jeweils zwischen 5% und 50% beträgt.

11. Verzahnungsteil nach mindestens einem der vorangegangenen Ansprüche,
**dadurch gekennzeichnet, dass**
die Vertiefungen jeweils eine Tiefe zwischen 5 µm und 200 µm und eine Breite zwischen 5 µm und 300µm aufweist.

12. Getriebe mit Verzahnungsteil nach mindestens einem der vorangegangenen Ansprüche,
**dadurch gekennzeichnet, dass**
das Verzahnungsteil mit einem weiteren Verzahnungsteil im Eingriff steht.

## Claims

1. A toothed part, having teeth,
wherein in a respective tooth flank of one or more or all of the teeth
- an arrangement, in particular a deterministic arrangement, of depressions and/or
- microtexturing
is provided, in particular is formed,
**characterised in that**
the depression in the sliding direction has a smaller extent than perpendicularly to the sliding direction,
wherein the direction of greatest extent of the depression has an angle to the sliding direction which amounts to more than 45°,
wherein the depressions are formed S-shaped or meandering.

2. A toothed part according to Claim 1,
**characterised in that**
the arrangement or microtexturing in the tooth flanks of the various teeth is identical.

3. A toothed part according to at least one of the preceding claims,
**characterised in that**
the depressions are in each case spaced apart from the pitch circle.

4. A toothed part according to at least one of the preceding claims,
**characterised in that**
the depressions form a regular grid.

5. A toothed part according to at least one of the preceding claims,
**characterised in that**
the depressions are arranged in a region of the respective tooth flank which has a higher amount of sliding than in the region of the effective pitch circle.

6. A toothed part according to at least one of the preceding claims,
**characterised in that**
the tooth flank which is provided without depressions has in transverse section an involute portion, with the sign of the curvature therefore being unchangeable along the tooth flank which is provided without depressions.

7. A toothed part according to at least one of the preceding claims,
**characterised in that**
the depressions in a first tangential direction to the tooth flank have a greater extent than in a different tangential direction of the tooth flank.

8. A toothed part according to at least one of the preceding claims,
**characterised in that**
the depressions are spaced apart regularly from each other.

9. A toothed part according to at least one of the preceding claims,
**characterised in that**
the depressions are arranged in rows which are arranged parallel to each other.

10. A toothed part according to at least one of the preceding claims,
**characterised in that**
the proportion by area of the depressions on the respective entire tooth flank surface amounts in each case to between 5% and 50%.

11. A toothed part according to at least one of the preceding claims,
**characterised in that**
the depressions in each case have a depth of between 5 µm and 200 µm and a width of between 5 µm and 300 µm.

12. A gear system with toothed part according to at least one of the preceding claims,
**characterised in that**
the toothed part is engaged with a further toothed part.

## Revendications

1. Partie d'engrènement ou de denture comportant des dents,
- un agencement, en particulier un agencement déterministe de creux et/ou
- une microtexturation
étant prévu(e)(s), notamment ménagé(e)(s) en profondeur
dans un flanc respectif d'une ou plusieurs, voire de toutes les dents,
**caractérisée par le fait que**
le creux présente une étendue moindre, dans la direction de glissement, que perpendiculairement à ladite direction de glissement,
la direction de l'étendue maximale dudit creux décrivant un angle supérieur à 45° par rapport à ladite direction de glissement,
les creux étant pratiqués avec configuration en S, ou en forme de méandres.

2. Partie d'engrènement ou de denture selon la revendication 1,
**caractérisée par le fait que**
l'agencement ou la microtexturation est identique sur les flancs des différentes dents.

3. Partie d'engrènement ou de denture selon au moins l'une des revendications précédentes,
**caractérisée par le fait que**
les creux sont respectivement distants du cercle primitif.

4. Partie d'engrènement ou de denture selon au moins l'une des revendications précédentes,
**caractérisée par le fait que**
les creux forment un réseau ou maillage régulier.

5. Partie d'engrènement ou de denture selon au moins l'une des revendications précédentes,
**caractérisée par le fait que**
les creux sont situés dans une région du flanc de dent considéré qui présente un pourcentage de glissement plus élevé que dans la région du cercle primitif de fonctionnement.

6. Partie d'engrènement ou de denture selon au moins l'une des revendications précédentes,
**caractérisée par le fait que**
le flanc de dent prévu avec absence de creux présente un segment de développante en coupe frontale, le signe de la courbure étant par conséquent invariable le long dudit flanc de dent prévu avec absence de creux.

7. Partie d'engrènement ou de denture selon au moins l'une des revendications précédentes,
**caractérisée par le fait que**
les creux présentent, dans une première direction tangentielle au flanc de dent, une plus grande étendue que dans une autre direction tangentielle audit flanc de dent.

8. Partie d'engrènement ou de denture selon au moins l'une des revendications précédentes,
**caractérisée par le fait que**
les creux sont régulièrement espacés les uns des autres.

9. Partie d'engrènement ou de denture selon au moins l'une des revendications précédentes,
**caractérisée par le fait que**
les creux sont agencés en des rangées disposées parallèlement les unes aux autres.

10. Partie d'engrènement ou de denture selon au moins l'une des revendications précédentes,
**caractérisée par le fait que**
la part superficielle des creux mesure entre 5 % et 50 % sur la surface totale considérée du flanc de dent.

11. Partie d'engrènement ou de denture selon au moins l'une des revendications précédentes,
**caractérisée par le fait que**
les creux présentent respectivement une profondeur comprise entre 5 µm et 200 µm, et une largeur comprise entre 5 µm et 300 µm.

12. Transmission équipée d'une partie d'engrènement ou de denture conforme à au moins l'une des revendications précédentes,
**caractérisée par le fait que**
la partie d'engrènement ou de denture est en prise avec une autre partie d'engrènement ou de denture.
